Europäisches Patentamt

(19) European Patent Office

Office européen des brevets

(11) Publication number : **0 290 173 B1**

(12) **EUROPEAN PATENT SPECIFICATION**

(45) Date of publication of patent specification :
04.03.92 Bulletin 92/10

(51) Int. Cl.⁵ : **A22C 29/00, A23L 1/325**

(21) Application number : **88303680.8**

(22) Date of filing : **22.04.88**

(54) **Shrimp-shaped food product and apparatus for making the product.**

(30) Priority : **06.05.87 JP 111519/87**

(43) Date of publication of application :
**09.11.88 Bulletin 88/45**

(45) Publication of the grant of the patent :
**04.03.92 Bulletin 92/10**

(84) Designated Contracting States :
**DE FR GB**

(56) References cited :
**EP-A- 277 410
EP-A- 0 239 203
US-A- 4 692 341**

(73) Proprietor : **KABUSHIKI KAISHA IKEUCHI
TEKKOSHO
1-9-9 Tamachi
Akashi 673 (JP)**

(72) Inventor : **Ikeuchi, Hiroji
9-17, Tamachi 1-chome
Akashi 673 (JP)**
Inventor : **Ikeuchi, Kiyoaki
9-17, Tamachi 1-chome
Akashi 673 (JP)**

(74) Representative : **Hayward, Denis Edward Peter
Lloyd Wise, Tregear & Co. Norman House
105-109 Strand
London WC2R 0AE (GB)**

## Description

The present invention relates to apparatus for producing a food product and to a food product made from minced fish meat and the like, having the appearance of cooked-and-peeled shrimp.

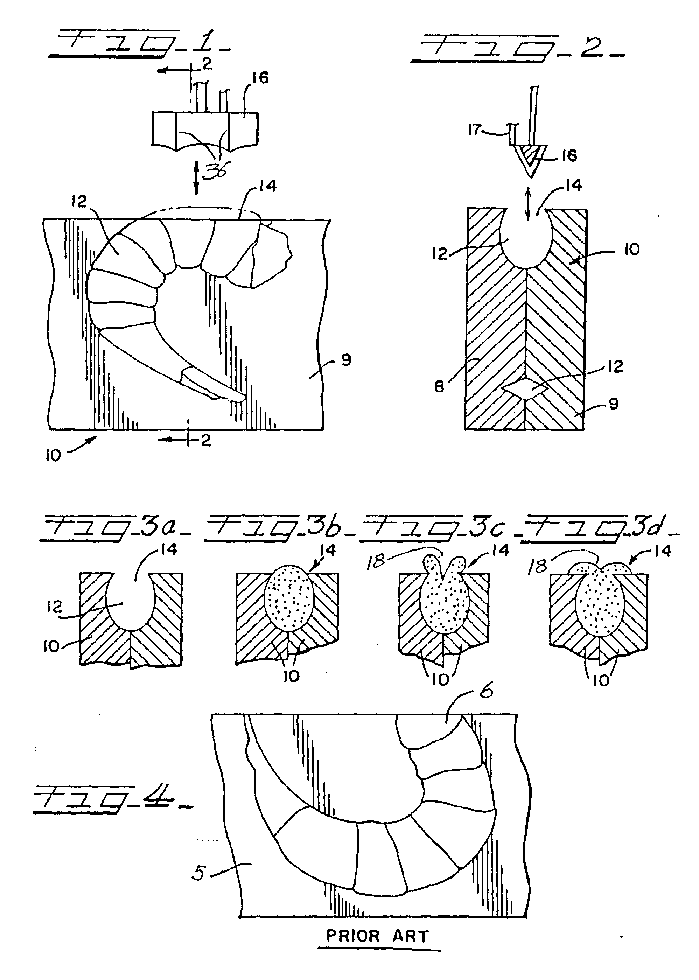

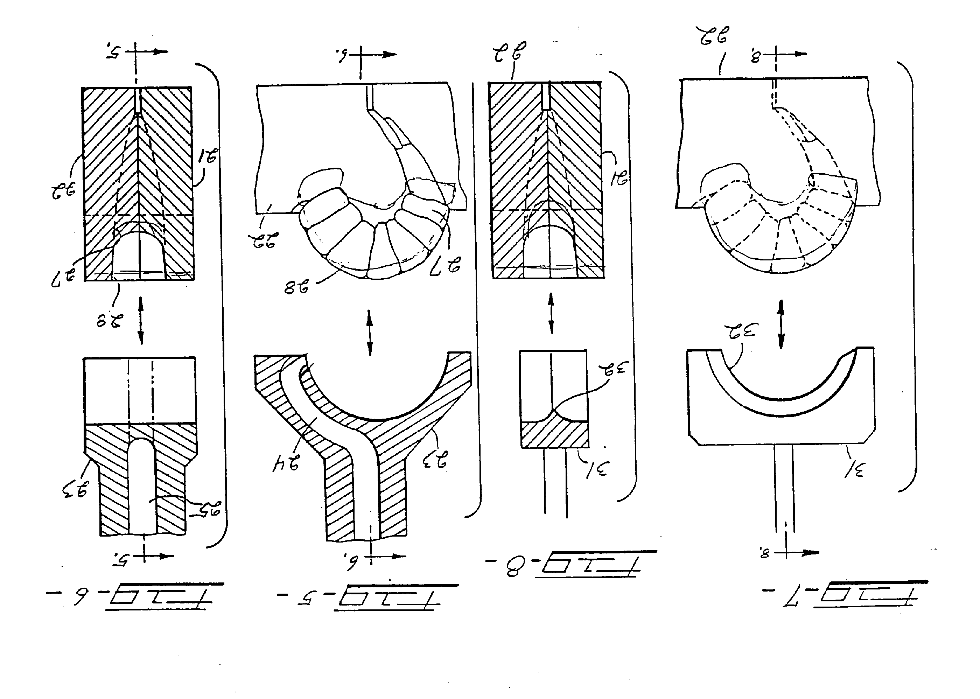

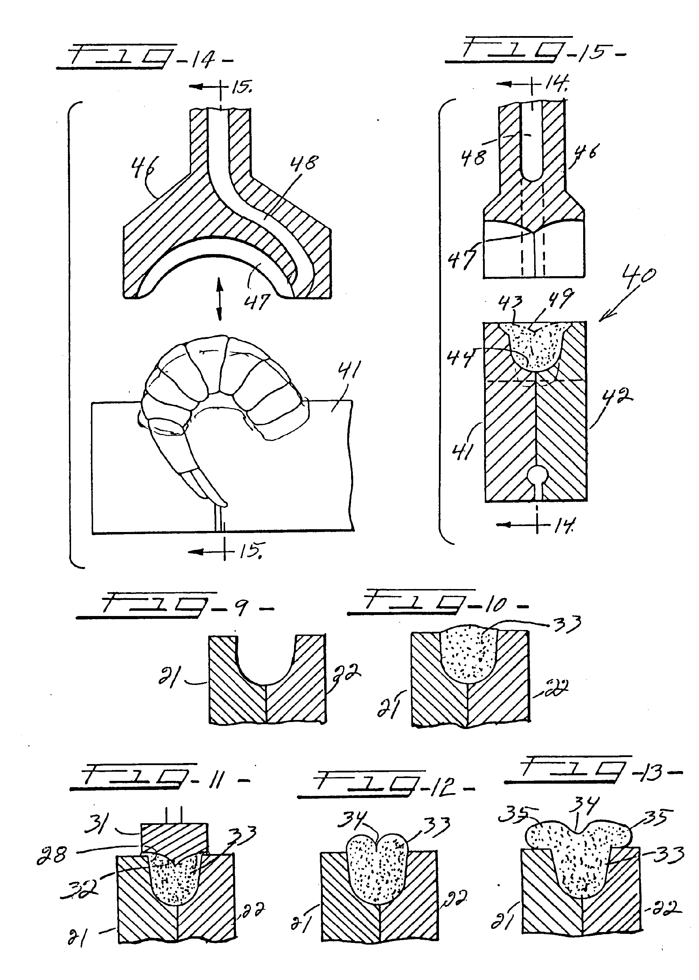

An apparatus for producing food products having the appearance of cooked-and-peeled shrimp from minced fish meat is disclosed in the applicants' E.P. application 87306359.8 (EP-A-0277410). The method disclosed therein in which such apparatus is used includes injecting minced fish meat into the mold cavity of a split metal mold having a cavity in the shape of a cooked-and-peeled or shelled shrimp, after first spraying a dye over the inner surface of the mold, heating and solidifying the minced fish meat in the mold, and thereafter removing the food product from the mold. The shrimp-like food product thus produced has a fan-like tail at one end, an arcuate body portion in the center, and a thicker end which, in a real shrimp, is broken off from the head. Figures 1 to 4 of the accompanying drawings are the same as Figures 1 to 4 of our aforesaid earlier patent application, except for some different reference numerals. As shown in Figure 4 herein, the mold cavity of a prior art split mold 5 for forming a shelled-shrimp-like food product has its fish meat receiving opening 6 at the thicker end where the removed head of an actual shrimp would have been connected.

The shelled-shrimp-shaped food products produced by a mold such as that of Figure 4 have the general appearance of the natural or real products. However, when the natural shrimps are large in size, their gut portion extending from the head to the tail is removed during the cooking-and-peeling process (the intestinal tract is removed in a degutting procedure). The resulting groove does not become colored even after heating, and both ridges or sides of the groove swell after heating. If the simulated food product were formed in this shape by the mold, the product could not then be removed out of the mold. Conversely, if the mold were shaped so that the product could be removed from the mold, the resulting food would not have a natural appearance.

Our aforementioned earlier patent specification therefore tackled the problem of achieving a shrimp-shaped processed food product which more closely resembles the appearance,of a real shrimp. To this end, that patent specification describes a method for producing shrimp-shaped products from minced fish meat material using a split mold having a shrimp-shaped mold cavity therein, the cavity having an injection opening for receiving the material and the opening being oriented along the curved back of the shrimp, comprising the steps of injecting minced fish meat material into the cavity of the split mold and filling the injection opening, forming a V-shaped groove in the portion of the material which appears at said injection opening by means of a V-shaped tool, and then heating the mold to produce a shrimp-shaped food product. It is an object of the present invention to achieve a further improvement in this field of technology.

According to the present invention, there is provided apparatus for producing a shrimp-shaped food product from minced or ground fish meat material, comprising a split mold having a mold cavity therein in the shape of a shelled shrimp, which mold cavity extends out as far as an external surface of the split mold where it has an opening to the exterior constituting an injection opening for introducing the fish meat material into the mold cavity, and a mold cover which is movable toward and away from the injection opening of the split mold to close and uncover said injection opening, which mold cover includes a supply passage whereby the fish meat material can be introduced through the mold cover and the injection opening into the mold cavity when the cover is in place thereby to fill said cavity and said opening with the fish meat material.

There may further be provided forming means likewise movable toward and away from said injection opening to form a groove in the fish meat material in said opening.

In one embodiment, the forming means may comprise a separate tool for use after the mold cavity and opening have been filled and the mold cover has been removed. In another embodiment, the forming means may comprise a projecting rib on the mold cover that extends into the injection opening.

The present invention also provides a method of molding with heating a food product simulating the appearance of a real shrimp, using a split mold having a mold cavity in the shape of a shelled shrimp, the split mold having an opening fitted with a mold cover which on removal of the cover gives access to the back region of the simulated shrimp to be molded, wherein during or after the filling of the mold with a fish meat material, but before heating the material with which the mold is filled, a groove is formed in the fish meat material along said accessible back region of the simulated shrimp.

According to the first embodiment, the shape of the mold opening and the mold cover fitting over it is arcuate to match the curved shape of the back of a shrimp. The mold cover is lowered over the injection opening in the mold in order to seal off the opening and a raw material consisting of a main ingredient of ground fish meat to which flavor and a caking agent have been added is injected into the cavity. After the cavity is filled with the raw material, the mold cover is removed and a compression tool having a rib with a wedge-shaped cross section is pressed down on to the top of the raw material in the mold opening so that it forms a groove in the raw material in the opening, and then the mold is heated in order to set the shape of the raw material.

According to the second embodiment, the mold cover itself is provided with a rib of wedge-shaped cross section. Thus, the groove is molded when the mold cavity is filled and a separate tool is not needed. After the cavity is filled with the raw material, the mold cover may or may not be removed before the mold is heated in order to set the shape of the raw material.

The invention further provides a processes food product comprising a raw material including minced or ground fish meat, flavoring and a caking agent, said material having been molded in the shape of a shelled shrimp, heated and solidified, the molded material having a continuous groove along the back of the body of the simulated shrimp, and further having lateral enlargements along both sides of said groove.

The present invention will be better understood from the following detailed description of preferred embodiments, taken in conjunction with the accompanying drawing, wherein:

Fig. 1 is a view of the mold cavity of one section of a split mold, and also shows a wedge-shaped forming device, all in accordance with the apparatus described in our aforesaid earlier patent specification;

Fig. 2 is a sectional view along the line 2-2 of Fig 1; ,

Figs. 3a, 3b, 3c and 3d are fragmentary views of a portion of Fig. 2, showing steps in molding a food product;

Fig. 4 is a view of the mold cavity of a prior art split mold;

Fig. 5 is a vertical cross-sectional view taken along the line 5-5 of Fig. 6 showing a split mold and mold cover in accordance with an embodiment of this invention;

Fig. 6 is a cross-sectional view taken along the line 6-6 of Fig. 5;

Fig. 7 is a side view of the split mold of Figs. 5 and 6 together with a compression tool;

Fig. 8 is a cross-sectional view taken along the line 8-8 of Fig. 7;

Figs. 9 to 13 show the various steps in the process of producing a food product using the apparatus shown in Figs. 5 to 8;

Fig. 14 is a cross-sectional view taken along the line 14-14 in Fig. 15 showing the apparatus in accordance with a second embodiment of this invention;

Fig. 15 is a cross-sectional view taken along the line 15-15 in Fig. 14.

With reference first to Figs. 1 and 2 showing the apparatus of our aforementioned earlier patent specification, the mold 10 is in two halves or sections 8 and 9 which have a mold cavity 12 between them for molding a cooked-and-peeled-shrimp-shaped food product. When the mold halves 8 and 9 are mated together, they form a substantially closed cavity resembling the shape of a shelled shrimp. The cavity 12 is shaped and positioned so that the back portion of the simulated shrimp between the shrimp's head and the middle of its body is located in an injection opening 14 formed in the top of the mold.

Above the mold 10 is a vertically movable V-sectioned former device 16 which is in the shape of a wedge and is located above the joint of the mold 10 and the opening 14, and the device 16 may be lowered down to the level of the opening 14 of the mold 10. The wedge device 16 has wave-shaped or scalloped side surfaces as shown in Fig. 1 with nodes 36 to imitate the nodes of the natural cooked-and-peeled shrimp. The device 16 also has a water supply tube 17 adjacent to it so that water oozes out and across the device 16 to keep the lower wedge surface wet. This prevents the minced fish meat material from sticking to the device 16 when a groove is pressed by it into the paste-like material.

Figs. 3a to 3d illustrate the steps in the production process. Fig. 3a shows the process prior to injection of the minced fish material into the mold; the desired coloring or dye is preferably applied over the internal surface of the cavity 12 before the injection of the minced fish meat material, as described in our previously mentioned patent specification. Fig. 3b shows the state upon the completion of injection of the minced fish material. The material swells over the top of the opening of the mold 10. Fig. 3c shows the state after lowering the V-sectioned device 16 on to the meat material and then raising it from the top of the opening 14, thereby forming a groove 18 in the material at the opening 14. Fig. 3d shows the state after heating the mold 10 filled with the material to solidify the minced fish meat material. The solidified food product then protrudes extensively over the flat upper surface of the mold. Thereafter, the product can be removed from the mold 10. The product has a groove extending from the shrimp head to the middle of the back, with both side ridges bounding the groove having a swelled appearance. Thus its appearance closely resembles that of cooked natural shrimp.

The apparatus of our earlier patent specification aforesaid thereby produces shelled-shrimp-like food products by injecting minced fish meat into a split metal mold having a cavity for molding the shelled-shrimp-like food product, and heating the minced fish meat material together with the mold. The mold has the opening for injecting the minced fish meat into the mold cavity at a position corresponding to the portion between the shrimp's head and the middle of its back, and the opening is orientated upwardly. As a result, when the minced fish meat is injected into the opening, the minced fish meat swells out of the opening after injection. When the V-section device is lowered into the swelled portion to impress a longitudinal groove in the back of the product and after the device is raised, a groove is formed in the swelled minced meat material at the opening. Then, when the minced fish meat is heated together with the mold to solidify the meat, the swelled portion at the opening will increase its irregularity in shape, thus closely resembling the swell of the natural gutted, cooked and shelled shrimp. The finished heated and solidified food product is then removed from the mold. The swell of the side ridges of the back portion varied from product to product. The appearance of the product thus has a close resemblance to that of cooked natural shrimp.

Turning now to the further improvement effected according to the present invention, Figs. 5 and 6 show a split mold including mating halves 21 and 22 and a mold cover 23 containing a supply passage 24 for the raw food material, the mold cover 23 being capable of being mounted on and removed from the lower part of the mold constituted by the halves 21, 22.

The view of the mold half 22 in Fig. 5 shows its inner mating surface, with the cavity 27 having the shape of the shelled meat of a shrimp. The cavity opening 28 is shaped by the mold into an upwardly extending convex circular arc approximating the shape of the back of a shrimp. The mold cover 23 (the mold cover can be constructed of plastic or some other material), which is shown separated in Figs. 5 and 6, is provided above the mold halves 21 and 22 and has a concave shape at its lower side to allow it to seal off the cavity opening 28. It is capable of being readily removed and remounted by being moved up and down.

In use, the mold cover 23 is placed on top of the mold halves 21 and 22, and the raw material is injected through the channel 24 of the mold cover into the mold cavity 27. When the injection of the raw material is complete, the mold cover 23 is raised. The mold cavity is thus filled with the raw material as shown in Fig. 10.

Figs. 7 and 8 show the mold halves 21 and 22 and a compression tool 31 which has a lengthwise concave under side like the mold cover and is lowered onto the cavity opening 28 after the cavity is filled. As best shown in Fig. 8, the concave bottom face of the compression tool 31 has a central downward projection or rib 32 with concavely curved lateral flanking faces so that it has generally a wedge-shape in cross section, this rib being also concave in the lengthwise direction to match the circular arc shape of the cavity opening 28 and the back of a shrimp. The compression tool 31 is preferably also provided with means to allow for moistening of the wedge-shaped rib 32 with water (such as a water tube like that shown at 17 in Fig. 2) so that, when the rib 32 presses down on the raw material in the mold, the raw material will not stick to it.

Fig. 9 shows the condition of the mold halves 21 and 22 before the injection of the raw material 33. Fig. 10 shows the condition after the injection of the raw material 33. Fig. 11 shows the condition when the compression tool 31 with its wedge-shaped rib 32 is lowered into the cavity opening 28 to form an arcuate groove 34 in the back of the food product. Fig. 12 shows the condition after the compression tool 31 is raised. Fig. 13 shows the condition when the raw material 33 is solidified by heating; as it solidifies, the raw material expands to form enlarged parts 35 on both sides of the groove 34, and it thereby resembles the shape of the degutted part of a real shrimp. When the halves 21 and 22 are separated after heating, the food product may easily be removed.

Furthermore, because the muscle tissues on a real shrimp are formed symmetrically toward the left and the right, and these block-like muscle tissues are connected from the head to the tail, when a real shrimp is cooked, in addition to a lengthwise groove being formed along the degutted part, the enlarged parts of the muscle tissues appear as successive tiers. In order to form similar successive tiers in the shrimp-shaped processed food product, the flanks of the rib 32 of the compression tool 31 can be scalloped to form nodes or projections at right angles to the wedge-shaped rib, similar to those shown at 36 in Fig. 1. In this way, the condition of the simulated muscle tissues along the degutted part can be made to resemble that of a real shrimp.

Figs. 14 and 15 show another embodiment of this invention. The two-piece split mold 40 formed by halves 41 and 42 is almost identical to the mold halves in Figs. 5 and 6 at the sides, but, in the vicinity of the cavity opening 43, the cavity 44 widens out somewhat. In this case the mold cover 46 for the supply of the raw material, and which has a concave shape as before so that it seals off the cavity opening 43, is also provided with a central projection or rib 47 having a generally wedge-shaped cross section extending along the arcuate bottom side of the mold cover, in position corresponding to the center of the cavity opening 43, which rib 47 is like the rib 32 in Figs. 7 and 8 so that the mold cover also forms the groove along the back of the product. Thus, a separate compression tool is not needed. A supply channel 48 is again formed through the mold cover 46.

When the mold cover 46 is pulled away after the injection of the raw material into the cavity 44, a groove 49 formed by the wedge-shaped rib 47 remains in the top of the raw material in the cavity 44. The shape of the molded fish meat is now similar to that shown in Fig. 11 and when the fish meat is heated and swells, the condition comes to be like that shown in Fig. 13. It is also possible to heat the mold and solidify the raw material without separating the mold cover 46 from the mold halves. Note that, when the mold cover 46 is separated from the mold halves, although not shown in Figs. 14 and 15, an appropriate moistening means can be used to facilitate separation of the raw material from the mold.

In the production of a shrimp-shaped processed food product by the injection of a raw material, for which ground fish meat is used as the main ingredient, into mold cavities and the subsequent heating and solidifying of this raw material in the molds, it has heretofore been difficult to produce such a product in the shape of the shelled meat of a real shrimp which has been degutted and cooked. With this invention, through special design of the mold apparatus, it is possible to simulate quite accurately the degutted part along the back of the shrimp, thus providing a product which more closely resembles a real shrimp. The processed food product obtained using this invention is extremely well suited for use in appetizers, deep frying, etc.

Whereas throughout this specification and claims the term "shrimp" has been used conveniently to describe the food article being simulated, it nevertheless should be understood that this term is intended to include within its scope other shrimp-like crustaceans, such as prawns, etc.

**Claims**

1. Apparatus for producing a shrimp-shaped food product from minced or ground fish meat material, comprising a split mold (21,22;40) having a mold cavity (27,44) therein in the shape of a shelled shrimp, which mold cavity extends out as far as an external surface of the split mold where it has an opening (28,43) to the exterior constituting an injection opening for introducing the fish meat material (33) into the mold cavity, and a mold cover (23,46) which is movable toward and away from the injection opening of the split mold to close and uncover said injection opening, which mold cover includes a supply passage (24,48) whereby the fish meat material can be introduced through the mold cover and the injection opening into the mold cavity when the cover is in place thereby to fill said cavity and said opening with the fish meat material.

2. Apparatus according to claim 1, further comprising forming means (32,47) likewise movable toward and away from said injection opening to form a groove (34,49) in the fish meat material in said opening.

3. Apparatus according to claim 2, wherein said forming means comprises a rib or projection (32) on a separate tool (31) which is movable to the mold opening after the mold cavity has been filled and the mold cover removed.

4. Apparatus according to claim 2, wherein said forming means comprises a rib or projection (47) on the inner side of the mold cover (46) next the mold opening, whereby said groove in the fish meat material is formed as the mold is being filled.

5. Apparatus according to claim 3 or claim 4, wherein said rib or projection has scalloped side surfaces.

6. Apparatus according to any of claims 2 to 5, and further including means (17) for wetting said forming means.

7. Apparatus according to any preceding claim, wherein the split mold is convexly curved at the injection opening to simulate the curved back of a shrimp, and the mold cover has a matching concave curvature to fit the mold curvature.

8. A method of molding with heating a food product simulating the appearance of a real shrimp, using a split mold having a mold cavity in the shape of a shelled shrimp, the split mold having an opening fitted with a mold cover which on removal of the cover gives access to the back region of the simulated shrimp to be molded, wherein during or after the filling of the mold with a fish meat material, but before heating the material with which the mold is filled, a groove is formed in the fish meat material along said accessible back region of the simulated shrimp.

9. A method according to claim 8, comprising removing the mold cover after the mold is filled and then forming the groove in the back region of the simulated shrimp by means of a separate tool.

10. A method according to claim 8, wherein the groove in the back region of the simulated shrimp is formed during filling of the fish meat material into the mold, the mold cover itself being provided on its inner side next the mold opening with a rib or projection shaped to form the groove.

11. A processed food product comprising a raw material including minced or ground fish meat, flavoring and a caking agent, said material having been molded in the shape of a shelled shrimp, heated and solidified, the molded material having a continuous groove (34,49) along the back of the body of the simulated shrimp, and further having lateral enlargements (35) along both sides of said groove.

12. A food product according to claim 11, wherein the side surfaces of said groove are scalloped.

**Patentansprüche**

1. Vorrichtung zur Herstellung eines garnelenenförmigen Nahrungsmittelprodukts aus kleingeschnittenem oder zerriebenem Fischfleischmaterial, dadurch gekennzeichnet, daß eine geteilte Form (21, 22; 40) mit einem Formnest (27, 44) in der Form einer geschälten Garnele, wobei das Formnest sich ganz nach außen zur Außenfläche der Form erstreckt, wo sie eine Einfüllöffnung (28, 42) aufweist, durch die das Fischfleischmaterial (33) in das Formnest eingebracht wird, und eine Formabdeckung (23, 46) vorgesehen sind, die zur Einfüllöffnung der zweiteiligen Form hin und von dieser weg bewegt werden kann, um die besagte Einfüllöffnung zu schließen bzw. freizugeben, wobei die Formabdeckung einen Zuführungskanal (24, 48) aufweist, durch den Fischfleischmaterial durch die Formabdeckung und die Einfüllöffnung in das Formnest eingebracht werden kann, wenn die Formabdeckung sich in der entsprechenden Position befindet, wodurch das Formnest und die öffnung mit Fischfleischmaterial befüllt werden.

2. Vorrichtung nach Anspruch 1, dadurch gekennzeichnet, daß ein Formungsmittel (32, 47) vorgesehen ist, das in gleicher Weise zu der besagten Einfüllöffnung hin und von dieser weg bewegt werden kann, wodurch eine Nut (32, 49) im Fischfleischmaterial in der besagten öffnung gebildet wird.

3. Vorrichtung nach Anspruch 2, dadurch gekennzeichnet, daß das besagte Formungsmittel eine Rippe oder einen Vorsprung (32) auf einem getrennten Werkzeug (31) aufweist, das zur Formöffnung hin bewegt werden kann, nachdem das Formnest befällt und die Formabdeckung entfernt worden ist.

4. Vorrichtung nach Anspruch 2, dadurch gekennzeichnet, daß das besagte Formungsmittel eine Rippe oder einen Vorsprung (47) auf der Innenseite der Formabdeckung (42) neben der Formöffnung aufweist, wodurch die besagte Nut im Fischfleischmaterial gebildet wird, wenn die Form befüllt wird.

5. Vorrichtung nach Anspruch 3 oder 4, dadurch gekennzeichnet, daß die besagte Rippe oder der besagte Vorsprung muschelförmige Seitenflächen aufweist.

6. Vorrichtung nach einem der Ansprüche 2 bis 5, dadurch gekennzeichnet, daß ein Mittel (17) zum Befeuchten des besagten Formungsmittels vorgesehen ist.

7. Vorrichtung nach einem der vorhergehenden Ansprüche, dadurch gekennzeichnet, daß die geteilte Form an der Einfüllöffnung konvex gebogen ist, um das gebogene Hinterteil einer Garnele zu simulieren, und daß die Formabdekkung eine zur Biegung der Form passende, konkave Biegung aufweist.

8. Verfahren zum Formen eines Nahrungsmittelprodukts unter Erhitzen, wobei das Aussehen einer Garnele simuliert wird, unter Verwendung einer geteilten Form mit einem Formnest in Form der geschälten Garnele, wobei die geteilte Form eine mit einer Formabdeckung versehene öffnung aufweist, die nach Entfernen der Formabdeckung Zugang zum hinteren Teil der zu formenden, simulierten Garnele bietet, dadurch gekennzeichnet, daß während oder nach Befüllen der Form mit einem Fischfleischmaterial, jedoch vor Erhitzen des Materials, mit dem die Form befüllt wird, eine Nut im Fischfleischmaterial entlang dem besagten zugänglichen hinteren Teil der simulierten Garnele geformt wird.

9. Verfahren nach Anspruch 8, dadurch gekennzeichnet, daß die Formabdeckung entfernt wird, wenn die Form befüllt ist, und daß dann die Nut im hinteren Teil der simulierten Garnele mittels eines getrennten Werkzeugs geformt wird.

10. Verfahren nach Anspruch 8, dadurch gekennzeichnet, daß die Nut im hinteren Teil der simulierten Garnele während des Befüllens der Form mit Fischfleischmaterial geformt wird, wobei die Formabdeckung selbst auf deren Innenseite neben der Formöffnung mit einer Rippe oder einem Vorsprung zum Formen der Nut vorgesehen ist.

11. Verarbeitetes Nahrungsmittelprodukt, dadurch gekennzeichnet, daß es aus einem Rohmaterial hergestellt wird, das aus kleingeschnittenem oder zerriebenem Fischfleisch besteht, daß es Würz- und Backzusätze aufweist, wobei das Material in der Form einer geschälten Garnele geformt, erhitzt und verfestigt wird und wobei das geformte Material eine durchgehende Nut (34, 49) entlang dem Rücken der simulierten Garnele sowie weiterhin seitliche Verbreiterungen (35) auf beiden Seiten der besagten Nut aufweist.

12. Nahrungsmittelprodukt nach Anspruch 11, dadurch gekennzeichnet, daß die Seitenflächen der besagten Nut muschelförmig ausgebildet sind.

**Revendications**

1. Appareil de fabrication d'un produit alimentaire en forme de crevette, à partir de chair de poisson hachée ou en masse, comprenant un moule fendu (21,22;40) présentant en son sein une cavité de moulage (27,44) ayant la forme d'une crevette avec sa coquille, la cavité de moulage s'étendant au-dehors, dans la mesure où une surface extérieure du moule fendu présente une ouverture (28,43) vers l'extérieur, pour constituer une ouverture d'injection servant à l'introduction de la chair de poisson (33) dans la cavité de moulage, et un couvercle de moule (23,46) déplaçable en s'approchant et en s'écartant de l'ouverture d'injection du moule fendu, pour obturer et découvrir ladite ouverture de moulage, le couvercle de moule comprenant un passage d'alimentation (24,48) par lequel la chair de poisson peut être introduite à travers le couvercle lorsque ce dernier est en place, de façon à remplir ladite cavité et ladite ouverture avec de la chair de poisson.

2. Appareil selon la revendication 1, comprenant en outre un moyen de formage (32,47) également déplaçable en s'approchant et en s'écartant de ladite ouverture d'injection, pour former une rainure (34,49) dans la chair de poisson située dans ladite ouverture.

3. Appareil selon la revendication 2, dans lequel ledit moyen de formage comprend une nervure ou saillie (32) placée sur un outil sépare (31) déplaçable vers l'ouverture de moulage après que la cavité de moulage ait été remplie et le couvercle de moule enlevé.

4. Appareil selon la revendication 2, dans lequel ledit moyen de formage comprend une nervure ou saillie (47), du côté intérieur dudit couvercle de moule (46), près de l'ouverture de moulage, de manière que ladite rainure ménagée dans la chair de poisson soit formée lorsque le moule a été rempli.

5. Appareil selon la revendication 3 ou 4, dans lequel ladite nervure ou saillie présente des surfaces latérales en forme de coquille.

6. Appareil selon l'une quelconque des revendications 2 à 5, et comprenant en outre des moyens (17) pour mouiller ledit moyen de formage.

7. Appareil selon l'une quelconque des revendications précédentes, dans lequel le moule fendu est à courbure convexe à l'ouverture d'injection, pour simuler la partie arrière incurvée d'une crevette, et le couvercle de moule présente une courbure concave ajustée, pour s'adapter à la courbure du moule.

8. Procédé de moulage accompagné de chauffage d'un produit alimentaire simulant l'apparence d'une vraie crevette, utilisant une cavité de moulage ayant la forme d'une crevette avec sa coquille, le moule fendu présentant une ouverture ménagée dans un couvercle de moule qui, lors de l'enlèvement du couvercle, donne accès à la zone arrière de la crevette simulée à former par moulage, dans lequel, durant ou après le remplissage du moule avec de la chair de poisson, mais avant le chauffage du matériau qui a servi à remplir le moule, une rainure est formée dans la chair de poisson, sur ladite zone arrière accessible de la crevette simulée.

9. Procédé selon la revendication 8, comprenant l'enlèvement du couvercle de moule après le remplissage du moule et ensuite le formage de la rainure dans la zone arrière de la crevette simulée, au moyen d'un outil séparé.

10. Procédé selon la revendication 8, dans lequel la rainure ménagée dans la zone arrière de la crevette simulée est formée pendant le remplissage avec la chair de poisson dans le moule, le couvercle de moule même étant pourvu sur sa face intérieure, près de l'ouverture de moulage, d'une nervure ou saillie conformée pour former la rainure.

11. Produit alimentaire obtenu par un traitement, comprenant une matière première composée de chair de poisson hachée ou en masse, l'apport d'un arôme et d'un agent agglutinant, ladite matière ayant été moulée dans la forme d'une crevette pourvue de sa carapace, chauffée et solidifiée, la matière moulée présentant une rainure continue (34,39) sur l'arrière du corps de la crevette simulée, et comprenant en outre des élargissements latéraux (34) sur les deux côtés de ladite rainure.

12. Produit alimentaire selon la revendication 11, dans lequel les surfaces latérales desdites rainures sont en forme de coquille.

_Fig_-1-

_Fig_-2-

_Fig_-3a_   _Fig_-3b_   _Fig_-3c_   _Fig_-3d_

_Fig_-4-

PRIOR ART

8

FIG-7-

FIG-8-

FIG-5-

FIG-6-

FIG -14-

FIG -15-

FIG -9-

FIG -10-

FIG -11-

FIG -12-

FIG -13-